# EUROPÄISCHE PATENTANMELDUNG

(11) **EP 3 533 659 A2**
(43) Veröffentlichungstag der Anmeldung: **04.09.2019**
(21) Anmeldenummer: 19150476.0
(22) Anmeldetag: 07.01.2019
(51) Int. Cl.: B60L 53/00

(54) **VORRICHTUNG ZUM LADEN EINES ELEKTRISCHEN ENERGIESPEICHERS EINES ELEKTRO-KRAFTFAHRZEUGS, INSBESONDERE ELEKTRO-NUTZFAHRZEUGS**

(30) Priorität: 07.02.2018 DE 102018102714
(71) Anmelder: MAN Truck & Bus SE, 80995 München (DE)
(72) Erfinder: Stauner, Vinzenz, 80807 München (DE); Lorenz, Sarah, 80637 München (DE)
(74) Vertreter: v. Bezold & Partner Patentanwälte - PartG mbB

(57) **Zusammenfassung**

Die Erfindung betrifft ein Vorrichtung zum Laden eines Kraftfahrzeugs (10). Die Vorrichtung weist einen ersten Verbinder (14), insbesondere Steckverbinder, zum Verbinden mit einem Ladekabel einer elektrischen Ladestation auf. Der erste Verbinder (14) weist einen elektrischen Ladeanschluss (14A) zum Empfangen eines elektrischen Ladestroms zum Laden des elektrischen Energiespeichers (12) auf. Die Vorrichtung weist mindestens eine erste Zustandsüberwachungseinheit (14B, 14C, 14D) zum Ausgeben eines elektrischen Signals, das einen Zustand einer Verbindung zwischen dem ersten Verbinder (14) und dem Ladekabel angibt, auf. Die Vorrichtung weist einen ersten Ladeschalter (18) zum Verbinden und Trennen des elektrischen Ladeanschlusses (14A) des ersten Verbinders (14) und des elektrischen Energiespeichers (12) auf. Die Vorrichtung weist eine Treiberschaltung (22), die eine elektrische Energieversorgung (58) des ersten Ladeschalters (18) basierend auf einem oder mehreren elektrischen Signalen von der mindestens einen ersten Zustandsüberwachungseinheit (14B, 14C, 14D) ansteuert, auf.

## Beschreibung

Die Erfindung betrifft eine Vorrichtung zum Laden eines elektrischen Energiespeichers, insbesondere einer Traktionsbatterie, eines Elektro-Kraftfahrzeugs, insbesondere Elektro-Nutzfahrzeugs.

Aus der DE 10 2011 008 700 A1 ist eine Vorrichtung zum Laden mindestens einer Traktionsbatterie bekannt. Die Vorrichtung umfasst einen Sensor zur Erfassung eines Verschlusszustandes der Ladeschnittstelle und einen Sensor zur Erfassung eines Einsteckzustandes des Ladekabels. Eine Sicherungseinrichtung erzeugt ein Signal zur Trennung der mindestens einen Traktionsbatterie von dem Traktionsnetz, falls eine sicherheitsrelevante Bedingung erfüllt ist.

Nachteilhaft an dem bekannten System kann sein, dass hohe Anforderungen an die funktionale Sicherheit bei der Implementierung der Überwachung eines Zustands der Verbindung zwischen Steckdose bzw. Stecker und Ladekabel in Form von Software in einer Steuereinheit bestehen. Die hohen Anforderungen an die funktionale Sicherheit führen zu einer arbeits- und kostenintensiven Implementierung der Zustandsüberwachung. Die hohen Anforderungen an die funktionale Sicherheit können sich beispielsweise aus der ISO 26262 für sicherheitsrelevante elektrische/elektronische Systeme in Kraftfahrzeugen ergeben.

Der Erfindung liegt die Aufgabe zu Grunde, eine alternative und/oder verbesserte Vorrichtung zum Laden eines elektrischen Energiespeichers eines Kraftfahrzeugs zu schaffen. Insbesondere soll die Implementierung mit einer Zustandsüberwachung vorgesehen sein, die weniger aufwendig ist, wobei die Anforderungen an die funktionale Sicherheit insbesondere gemäß der ISO 26262 erfüllbar sein sollen.

Die Aufgabe wird gelöst durch die Merkmale des unabhängigen Anspruchs. Vorteilhafte Weiterbildungen sind in den abhängigen Ansprüchen und der Beschreibung angegeben.

Die Vorrichtung ist zum Laden eines elektrischen Energiespeichers, insbesondere einer Traktionsbatterie (vorzugsweise zum Antrieben des Kraftfahrzeugs, z. B. Hochvolt-Traktionsbatterie), eines Elektro-Kraftfahrzeugs (z. B (reines) Elektrofahrzeug, Hybridfahrzeug usw.), insbesondere Elektro-Nutzfahrzeugs, geeignet. Die Vorrichtung weist einen ersten Verbinder (z. B. Ladeschnittstelle), insbesondere Steckverbinder (z. B. Steckdose für einen Stecker eines Ladekabels oder Stecker für eine Steckdose eines Ladekabels), zum Verbinden mit einem Ladekabel einer elektrischen Ladestation auf. Der erste Verbinder weist einen elektrischen Ladeanschluss zum Empfangen eines elektrischen Ladestroms (z. B Gleichstrom-Ladestrom, Wechselstrom-Ladestrom (einphasig oder mehrphasig)) zum Laden des elektrischen Energiespeichers auf. Die Vorrichtung weist mindestens eine erste Zustandsüberwachungseinheit (z. B. elektrischer Kontakt, Anschluss, Schalter und/oder Sensor) zum Ausgeben eines elektrischen Signals, das einen Zustand einer Verbindung zwischen dem ersten Verbinder und dem Ladekabel angibt, auf. Die Vorrichtung weist einen ersten Ladeschalter (z. B. ein oder mehrere Hochvolt-Schütze) zum Verbinden und Trennen des elektrischen Ladeanschlusses des ersten Verbinders und des elektrischen Energiespeichers auf. Die Vorrichtung weist eine Treiberschaltung auf, die eine elektrische Energieversorgung des ersten Ladeschalters basierend auf einem oder mehreren elektrischen Signalen von der mindestens einen ersten Zustandsüberwachungseinheit ansteuert (z. B. schaltet).

Damit kann die Ansteuerung der elektrischen Energieversorgung des Ladeschalters zweckmäßig in Hardware als Treiberschaltung implementiert sein. Die Anforderungen an die funktionale Sicherheit können bei Treiberschaltungen geringer sein als bei in Software implementierten Funktionalitäten, insbesondere unter Berücksichtigung der ISO 26262. Damit kann der Aufwand der Implementierung der Zustandsüberwachung und der entsprechenden Schaltung des Ladeschalters verringert werden. Zudem kann verhindert werden, dass ein Fehler in einer ausschließlich in Software implementierten Schaltung eines Ladeschalters zu einem ungewünschten Schließen der Ladeschalterführen kann, wenn beispielsweise das Ladekabel nicht verbunden oder nicht verriegelt ist.

Insbesondere kann die Treiberschaltung gemäß ISO 26262 implementiert sein. Die Implementierung gemäß der ISO 26262 hat beispielsweise Auswirkungen auf die Komponentenauswahl.

In einem Ausführungsbeispiel weist die mindestens eine Zustandsüberwachungseinheit eine Zustandsüberwachungseinheit (z. B. Anschluss, Schalter und/oder Sensor; insbesondere einen Proximity-Pilot-Kontakt) zum Ausgeben eines elektrischen Signals (z. B. nach IEC 61851), das ein Vorhandensein einer Verbindung zwischen dem ersten Verbinder und dem Ladekabel angibt, auf. Damit kann zweckmäßig überprüft werden, ob überhaupt ein Ladekabel zum Laden des elektrischen Energiespeichers an dem ersten Verbinder ordnungsgemäß angeschlossen ist.

Insbesondere kann von der Treiberschaltung ein Spannungslevel eines Proximity-Pilot-Signals, z. B. nach IEC 61851(-1), geprüft werden, z. B. für Typ 1 - Ladestecker und/oder für Typ 2 - Ladestecker. Beispielsweise kann eine Überwachung des gesamten Bereichs des PP-Signals (Proximity-Pilot-Signals) durchgeführt werden.

Insbesondere kann in Abhängigkeit von dem Ladesteckertyp ein Spannungswert zwischen 1,14 V und 3,85 V variieren, wenn ein Stecker verbunden ist (bei Nennwerten).

In einem weiteren Ausführungsbeispiel weist die mindestens eine Zustandsüberwachungseinheit eine Zustandsüberwachungseinheit (z. B. einen Anschluss, einen Schalter und/oder einen Sensor; insbesondere einen Verriegelungsschalter) zum Ausgeben eines elektrischen Signals, das einen Zustand einer Verriegelung zwischen dem ersten Verbinder und dem Ladekabel angibt, auf. Damit kann zweckmäßig überwacht werden, ob das Ladekabel und der erste Verbinder miteinander verriegelt sind, insbesondere ob das Ladekabel in dem ersten Verbinder verriegelt ist. So kann insbesondere ein unbeabsichtigtes Lösen des Ladekabels von dem ersten Verbinder während des Ladens verhindert werden.

Insbesondere kann eine Referenzspannung für die Verriegelungsüberwachung zugeführt werden, die sich auf die Versorgungsspannung eines Bordladegeräts bezieht (z. B. 12 V; Versorgung des Bordladegeräts nicht stabilisiert).

In einem weiteren Ausführungsbeispiel weist die mindestens eine Zustandsüberwachungseinheit eine Zustandsüberwachungseinheit (z. B. Anschluss und/oder Sensor; insbesondere einen Temperatursensor) zum Ausgeben eines elektrischen Signals, das eine Temperatur des Ladekabels, des ersten Verbinders und/oder des elektrischen Ladeanschlusses angibt, auf. Damit kann zweckmäßig einer Temperatur eines Ladeleiters, insbesondere beim Laden des elektrischen Energiespeichers, überwacht werden. Überschreitet die Temperatur beispielsweise einen vorbestimmten Grenzwert, kann der Ladevorgang beendet werden, indem die elektrische Energieversorgung des ersten Ladeschalters unterbrochen wird, wodurch der erste Verbinder vom elektrischen Energiespeicher getrennt wird.

Beispielsweise kann der Temperatursensor einen NTC (Widerstand oder Thermistor mit negativem Temperaturkoeffizient (englisch: negative temperature coefficient - NTC)) oder eine NTC-Kette, mit zum Beispiel zwei in Reihe oder parallel geschalteten NTCs, aufweisen.

In einer Ausführungsform weist die Vorrichtung ferner einen zweiten Verbinder (z. B. Ladeschnittstelle), insbesondere Steckverbinder (z. B. Steckdose für einen Stecker des Ladekabels oder Stecker für eine Steckdose eines Ladekabels), zum Verbinden mit einem Ladekabel einer elektrischen Ladestation auf. Der zweite Verbinder weist einen elektrischen Ladeanschluss zum Empfangen eines elektrischen Ladestroms zum Laden des elektrischen Energiespeichers auf. Die Vorrichtung kann insbesondere zudem mindestens eine zweite Zustandsüberwachungseinheit (z. B. elektrischer Kontakt, Anschluss, Schalter und/oder Sensor) zum Ausgeben eines elektrischen Signals, das einen Zustand einer Verbindung zwischen dem zweiten Verbinder und dem Ladekabel angibt, aufweisen. Dies ermöglicht, dass der elektrische Energiespeicher wahlweise mittels des ersten Verbinders oder des zweiten Verbinders aufgeladen werden kann. Die Zustände beider Verbinder können überwacht werden.

Insbesondere können der erste Verbinder und der zweite Verbinder an unterschiedlichen Positionen des Kraftfahrzeugs angeordnet sein.

Vorzugsweise kann die mindestens eine erste Zustandsüberwachungseinheit wie die mindestens eine zweite Zustandsüberwachungseinheit ausgebildet sein.

Zweckmäßig kann der zweite Verbinder wie der erste Verbinder ausgebildet sein.

Insbesondere sind der erste Verbinder und der zweite Verbinder alternativ zueinander geschaltet, sodass immer nur über maximal einen der beiden Verbinder ein Ladestrom zum Laden des elektrischen Energiespeichers zugeführt werden kann.

In einer weiteren Ausführungsform weist die Vorrichtung ferner einen zweiten Ladeschalter (zum Beispiel einen oder mehrere Hochvolt-Schütze) zum Verbinden und Trennen des elektrischen Ladeanschlusses des zweiten Verbinders mit dem elektrischen Energiespeicher auf. Damit können zweckmäßig separate Ladeschalter für den ersten Verbinder und den zweiten Verbinder vorgesehen sein. Dies kann die funktionale Sicherheit erhöhen.

In einer Weiterbildung steuert die Treiberschaltung eine elektrische Energieversorgung des zweiten Ladeschalters basierend auf einem oder mehreren elektrischen Signalen von der mindestens einen zweiten Zustandsüberwachungseinheit an. Auch hier kann die in Hardware implementierte Ansteuerung der elektrischen Energieversorgung des zweiten Ladeschalters zu einem geringeren Aufwand bei der Implementierung gegenüber reinen Softwarelösungen führen, insbesondere unter Berücksichtigung der ISO 26262. Ferner kann ein ungewünschtes Schließen des zweiten Ladeschalters aufgrund von fehlerhaften Programmabläufen in der Software verhindert werden.

Beispielsweise kann die Treiberschaltung die elektrische Energieversorgung des ersten Ladeschalters und/oder des zweiten Ladeschalters mittels eines Kopplers, zum Beispiel mittels eines Optokopplers, eines Transistor o.ä., ansteuern (z. B. einschalten und ausschalten).

In einer Ausführungsvariante weist die Treiberschaltung einen ersten Invertierer auf, der beim Einschalten der elektrischen Energieversorgung des ersten Ladeschalters durch die Treiberschaltung eine elektrische Energieversorgung des zweiten Ladeschalters verhindert. Alternativ oder zusätzlich weist die Treiberschaltung einen zweiten Invertierer auf, der beim Einschalten einer elektrischen Energieversorgung des zweiten Ladeschalters durch die Treiberschaltung die elektrische Energieversorgung des ersten Ladeschalters verhindert. So kann sichergestellt werden, dass immer nur ein Verbinder zum Laden des Kraftfahrzeugs verwendet wird.

In einer weiteren Ausführungsvariante weist die Treiberschaltung einen ersten Diagnosesignalpfad zum Verbinden mit einer Steuereinheit zum Übertragen eines elektrischen Signals, das einen Zustand der elektrischen Energieversorgung des ersten Ladeschalters durch die Treiberschaltung angibt, auf. Alternativ oder zusätzlich weist die Treiberschaltung einen zweiten Diagnosepfad zum Verbinden mit einer Steuereinheit zum Übertragen eines elektrischen Signals, das einen Zustand einer elektrischen Energieversorgung des zweiten Ladeschalters durch die Treiberschaltung angibt, auf. Dies ermöglicht Diagnosefunktionen durch die Steuereinheit sowie eine sichere Schaltung (z. B. Öffnen, Schließen) der Ladeschalter.

In einer Ausführungsform weist die Treiberschaltung ferner einen ersten Filter, insbesondere Entprellfilter, zum Filtern, insbesondere Entprellen, eines elektrischen Signals zum Ansteuern der elektrischen Energieversorgung des ersten Ladeschalters auf. Alternativ oder zusätzlich weist die Treiberschaltung einen zweiten Filter, insbesondere Entprellfilter, zum Filtern, insbesondere Entprellen, eines elektrischen Signals zum Ansteuern der elektrischen Energieversorgung des zweiten Ladeschalters auf. Die Filter können beispielsweise ermöglichen, dass die elektrische Energieversorgung nicht zu schnell nacheinander ein- und ausgeschaltet wird.

Insbesondere kann der erste Filter und/oder der zweite Filter einen Tiefpass aufweisen, z. B. einen RC-Tiefpass (Tiefpass aus ohmscher Widerstand und Kondensator) und/oder eine elektronische Schaltung.

In einer weiteren Ausführungsform weist die Treiberschaltung ferner mindestens einen Komparator, insbesondere Fensterkomparator, vorzugsweise Fensterspannungskomparator, der der mindestens einen ersten Zustandsüberwachsungseinheit und/oder der mindestens einen zweiten Zustandsüberwachungseinheit nachgeschaltet ist, auf. Die Komparatoren ermöglichen eine Auswertung der von den Zustandsüberwachungseinheiten zugeführten elektrischen Signale, insbesondere Spannungssignale, auf Hardwarebasis. Insbesondere können die zugeführten elektrischen Signale mit vorbestimmten zulässigen Signalbereichen, insbesondere Spannungsbereichen, und/oder Signallevel, insbesondere Spannungslevel, verglichen werden und/oder ein entsprechendes Vergleichssignal (z. B. Spannung hoch oder Spannung niedrig) ausgegeben werden.

Insbesondere können die Eingänge der Komparatoren für die zugeführten Signale einen Eingangswiderstand von >100 MΩ aufweisen, sodass vorzugsweise die Signallevel nicht beeinflusst werden.

Insbesondere kann ein Zustand jedes Eingangssignals mit einem anpassbaren oberen und unteren Schwellwert erfasst werden, um beispielsweise Hardwaretoleranzen und Messungenauigkeiten zu berücksichtigen.

Beispielsweise kann ein Zustand des Verriegelungssignals unter Berücksichtigung einer Fluktuation einer Versorgungsspannung durch das Bordladegerät geprüft werden.

In einem weiteren Ausführungsbeispiel sind mehrere erste Zustandsüberwachungseinheiten vorgesehen, denen jeweils ein Komparator, insbesondere Fensterkomparator, vorzugsweise Fensterspannungskomparator, nachgeschaltet ist, denen, insbesondere, ein erstes Und-Gatter nachgeschaltet ist. Alternativ oder zusätzlich sind mehrere zweite Zustandsüberwachungseinheiten vorgesehen, denen jeweils ein Komparator, insbesondere Fensterkomparator, vorzugsweise Fensterspannungskomparator, nachgeschaltet ist, denen, insbesondere, ein zweites Und-Gatter nachgeschaltet ist. Mittels der Und-Gatter kann geprüft werden, ob mehrere überwachte Zustände im zulässigen Bereich sind.

In einer Weiterbildung ist das erste Und-Gatter dem zweiten Invertierer nachgeschaltet und/ oder das zweite Und-Gatter dem ersten Invertierer nachgeschaltet.

In einem weiteren Ausführungsbeispiel ist das Schalten (z. B. Öffnen, Schließen) des ersten Ladeschalters und/oder des zweiten Ladeschalters von einer Steuereinheit gesteuert. Damit kann auf eine aufwendige, in Hardware implementierte Schaltung der Ladeschalter verzichtet werden. Stattdessen ist lediglich die Schaltung der Energieversorgung der Ladeschalter auf sichere und einfache Weise in Form der Treiberschaltung in Hardware implementiert.

Der Begriff "Steuereinheit" kann sich insbesondere auf eine Elektronik beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" umfasst sein.

Die Erfindung betrifft auch ein Kraftfahrzeug, insbesondere Nutzfahrzeug (zum Beispiel Lastkraftwagen oder Omnibus), mit einer Vorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Kraftfahrzeugs; und
- Figur 2: ein Blockschaltbild einer beispielhaften Treiberschaltung zum Ansteuern einer elektrischen Versorgung mindestens eines Ladeschalters gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

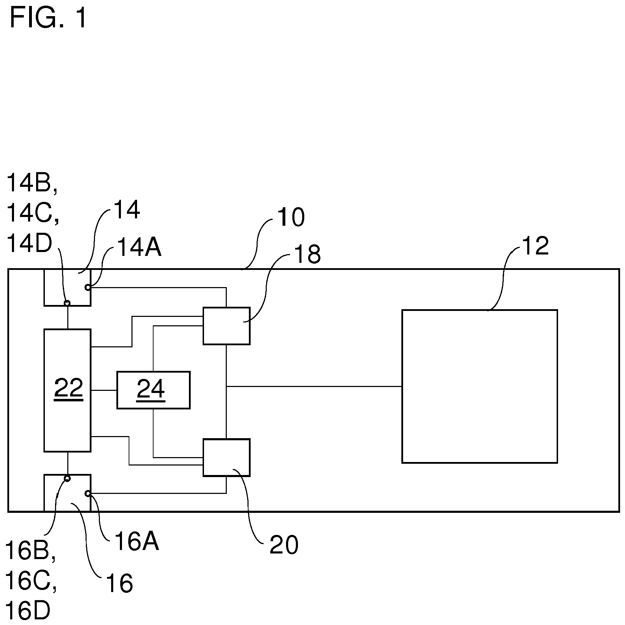

Die Figur 1 zeigt ein Kraftfahrzeug 10. Das Kraftfahrzeug 10 ist als ein Elektro-Kraftfahrzeug ausgebildet. Insbesondere ist das Kraftfahrzeug 10 als ein reines Elektro-Kraftfahrzeug oder ein Hybrid-Elektro-Kraftfahrzeug, zum Beispiel Plug-In-Hybrid-Elektro-Kraftfahrzeug ausgebildet. Vorzugsweise ist das Kraftfahrzeug 10 ein Nutzfahrzeug, zum Beispiel ein Lastkraftwagen oder ein Omnibus.

Das Kraftfahrzeug 10 weist einen elektrischen Energiespeicher 12 auf. Der elektrische Energiespeicher 12, zum Beispiel eine Hochvolt-Traktionsbatterie, ist zum Speichern und Abgeben von elektrischer Energie zum Antreiben des Kraftfahrzeugs 10 ausgebildet.

Das Kraftfahrzeug 10 weist einen ersten Verbinder 14 auf. Der erste Verbinder 14 kann beispielsweise als ein Steckverbinder, insbesondere als eine Steckdose oder ein Stecker, ausgebildet sein. Der erste Verbinder 14 ist zur Verbindung, insbesondere zum Einstecken, von einem Ladekabel einer Ladestation (nicht dargestellt) ausgebildet. Mittels des mit dem ersten Verbinder 14 verbundenen Ladekabels kann elektrische Energie (z. B. mittels Gleichstrom und/oder Wechselstrom) zum Aufladen des elektrischen Energiespeichers 12 (beispielsweise über eine Bordladeeinrichtung (nicht dargestellt)) zugeführt werden.

Insbesondere kann der erste Verbinder 14 einen elektrischen Ladeanschluss 14A aufweisen, über den elektrische Energie zum Laden des elektrischen Energiespeichers 12 zugeführt werden kann. Der erste Verbinder 14 kann ferner mindestens eine Zustandsüberwachungseinheit 14B, 14C, 14D aufweisen. Mittels der Zustandsüberwachungseinheit(en) 14B, 14C, 14D kann ein Zustand einer Verbindung zwischen dem ersten Verbinder 14 und dem Ladekabel überwacht werden. Die Zustandsüberwachungseinheit(en) 14B, 14C, 14D kann bzw. können ein entsprechendes elektrisches Signal ausgeben. Die Zustandsüberwachungseinheiten 14B,14C, 14D können beispielsweise als elektrische Kontakte, Anschlüsse, Schalter und/oder Sensoren ausgebildet sein.

Das Kraftfahrzeug 10 kann optional einen zweiten Verbinder 16 aufweisen. Der erste Verbinder 14 und der zweite Verbinder 16 können separat voneinander an unterschiedlichen Positionen des Kraftfahrzeugs 10 angeordnet sein. Das Ladekabel kann entweder mit dem ersten Verbinder 14 oder mit dem zweiten Verbinder 16 verbunden werden.

Der zweite Verbinder 16 kann beispielsweise wie der erste Verbinder 14 ausgebildet sein. Insbesondere kann der zweite Verbinder 16, wie der erste Verbinder 14, einen elektrischen Ladeanschluss 16A und mindestens eine Zustandsüberwachungseinheit 16B, 16C, 16D zum Überwachen einer Verbindung zwischen dem zweiten Verbinder 16 und dem Ladekabel aufweisen.

Es ist auch möglich, dass eine oder mehrere Zustandsüberwachungseinheiten separat zu den Verbindern 14, 16 vorgesehen sind.

Das Kraftfahrzeug 10 weist einen ersten Ladeschalter 18 auf. Im geschlossenen Zustand verbindet der erste Ladeschalter 18 den ersten Verbinder 14, insbesondere den Ladeanschluss 14A, elektrisch mit dem elektrischen Energiespeicher 12. Der elektrische Energiespeicher 12 kann über das angeschlossene Ladekabel geladen werden. Im geöffneten Zustand trennt der erste Ladeschalter 18 den ersten Verbinder 14, insbesondere den Ladeanschluss 14A, von dem elektrischen Energiespeicher 12.

Das Kraftfahrzeug 10 kann einen zweiten Ladeschalter 20 zum elektrischen Verbinden und Trennen zwischen dem zweiten Verbinder 16, insbesondere dem Ladeanschluss 16A, und dem elektrischen Energiespeicher 12 aufweisen.

Der erste Ladeschalter 18 und/oder der zweite Ladeschalter 20 können jeweils eines oder mehrere (z. B. ein Paar) Schaltelemente, z. B. Hochvolt-Schütze, aufweisen.

Das Kraftfahrzeug 10 weist eine Treiberschaltung 22 auf. Um den ersten Ladeschalter 18 und, sofern vorhanden, den zweiten Ladeschalter 20, zu schalten (zum Beispiel Öffnen, Schließen), müssen diese mit elektrischer Energie versorgt werden. Die elektrische Energieversorgung des ersten Ladeschalters 18 und, sofern vorhanden, des zweiten Ladeschalters 20 ist von der Treiberschaltung 22 gesteuert. Wenn die Ladeschalter 18, 20 nicht mit elektrischer Energie versorgt sind, können sie nicht geschaltet, insbesondere geschlossen, werden.

Wie in Figur 1 dargestellt ist, ist die Treiberschaltung 22 zum Empfangen von elektrischen Signalen mit dem ersten Ladeschalter 18 und mit dem zweiten Ladeschalter 20 elektrisch verbunden. Insbesondere ist die Treiberschaltung 22 mit den Zustandsüberwachungseinheiten 14B-14D, 16B-16D elektrisch verbunden. Die Treiberschaltung 22 empfängt von den Zustandsüberwachungseinheiten 14B-14D und 16B-16D elektrische Signale, die einen Zustand der Verbindung zwischen dem jeweiligen Verbinder 14 oder 16 und dem Ladekabel angeben. Der Zustand kann sich beispielsweise auf ein Vorhandensein des Ladekabels am jeweiligen Verbinder 14 oder 16, eine Verriegelung des Ladekabels am jeweiligen Verbinder 14 oder 16 oder eine Temperatur der elektrischen Leitung(en) beziehen.

Die Treiberschaltung 22 ist zusätzlich mit einer elektrischen Versorgung des ersten Ladeschalters 18 und des zweiten Ladeschalters 20 elektrisch verbunden. Die Treiberschaltung 22 kann die elektrische Versorgung des ersten Ladeschalters 18 und des zweiten Ladeschalters 20 verbinden und unterbrechen. Die Ansteuerung der elektrischen Versorgung des ersten Ladeschalters 18 und des zweiten Ladeschalters 20 durch die Treiberschaltung 22 basiert insbesondere auf den von den Zustandsüberwachungseinheiten 14B-14D und 16B-16D empfangenen elektrischen Signalen.

Das Kraftfahrzeug 10 kann eine elektronische Steuereinheit 24 aufweisen. Mittels der elektronischen Steuereinheit 24 können der erste Ladeschalter 18 und, sofern vorhanden, der zweite Ladeschalter 20 geschaltet, insbesondere geöffnet oder geschlossen, werden. Die elektronische Steuereinheit 24 kann, insbesondere zum Empfangen von elektrischen Signalen, mit der Treiberschaltung 22 elektrisch verbunden sein. Die elektronische Steuereinheit 24 kann als separates Steuergerät oder als integriertes Steuergerät, das weitere Steuerungsfunktionen des Kraftfahrzeugs realisiert, ausgebildet sein.

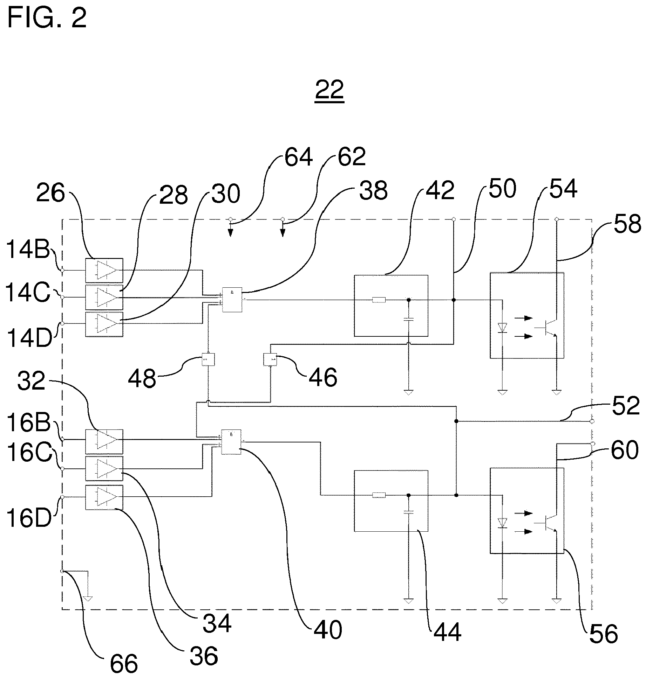

In Figur 2 ist eine beispielhafte Ausführungsform der Treiberschaltung 22 dargestellt. Es wird insbesondere darauf hingewiesen, dass die Treiberschaltung 22 in Hardware implementiert ist. Nachfolgend ist die Treiberschaltung 22 von Figur 2 unter Bezugnahme auf die Figur 1 beschrieben.

Die Treiberschaltung 22 weist mehrere Komparatoren 26, 28, 30, 32, 34, 36 und mehrere Und-Gatter 38, 40 auf. Die Komparatoren 26, 28, 30, 32, 34, 36 können insbesondere als Fensterkomparatoren, insbesondere als Fensterspannungskomparatoren, ausgebildet sein.

Der erste Komparator 26 ist elektrisch mit der Zustandsüberwachungseinheit 14B zum Empfangen von elektrischen Signalen, insbesondere Spannungssignalen, verbunden. Die Zustandsüberwachungseinheit 14B kann beispielsweise zur Überwachung, ob ein Ladekabel mit dem ersten Verbinder 14 verbunden ist, ausgebildet sein. Insbesondere kann die Zustandsüberwachungseinheit 14B als ein so genannter Proximity-Pilot-Kontakt (auch Plug-Present-Kontakt genannt) ausgebildet sein. Die Zustandsüberwachungseinheit 14B führt dem ersten Komparator 26 ein elektrisches Signal zu, dass das Vorhandensein einer Verbindung zwischen dem Ladekabel und dem ersten Verbinder 14 angibt.

Der erste Komparator 26 ist so ausgebildet, dass basierend auf einem Wert, zum Beispiel einer Spannungshöhe, des elektrischen Signals von der Zustandsüberwachungseinheit 14B erfasst wird, ob eine Verbindung zwischen dem Ladekabel und dem ersten Verbinder 14 vorliegt. Beispielsweise kann der erste Komparator 26 vergleichen, ob eine Spannungshöhe des elektrischen Signals innerhalb eines vorbestimmten, zum Beispiel zulässigen, Spannungsbereichs liegt oder mit einem vorbestimmten, zum Beispiel zulässigen, Spannungswert übereinstimmt. Sofern der erste Komparator 26 erfasst, dass eine Verbindung zwischen dem Ladekabel und dem ersten Verbinder 14 vorliegt, kann der erste Komparator 26 ein entsprechendes elektrisches Signal zu dem ersten Und-Gatter 38 zuführen.

Der zweite Komparator 28 ist elektrisch mit der Zustandsüberwachungseinheit 14C zum Empfangen von elektrischen Signalen, insbesondere Spannungssignalen, verbunden. Die Zustandsüberwachungseinheit 14C kann beispielsweise zur Überwachung, ob ein Ladekabel mit dem ersten Verbinder 14 verriegelt ist, ausgebildet sein. Die Verriegelung zwischen dem Ladekabel und dem ersten Verbinder 14 kann beispielsweise manuell und/oder automatisch erfolgen. Die Zustandsüberwachungseinheit 14C kann beispielsweise einen Mikroschalter, der bei einer Verriegelung und/oder bei einer Entriegelung geschaltet wird, aufweisen.

Der zweite Komparator 28 ist so ausgebildet, dass basierend auf einem Wert, zum Beispiel einer Spannungshöhe, des elektrischen Signals von der Zustandsüberwachungseinheit 14C erfasst wird, ob eine Verriegelung zwischen dem Ladekabel und dem ersten Verbinder 14 vorliegt. Beispielsweise kann der zweite Komparator 28 vergleichen, ob eine Spannungshöhe des elektrischen Signals innerhalb eines vorbestimmten, zum Beispiel zulässigen, Spannungsbereichs liegt oder mit einem vorbestimmten, zum Beispiel zulässigen, Spannungswert übereinstimmt. Sofern der zweite Komparator 28 erfasst, dass eine Verriegelung zwischen dem Ladekabel und dem ersten Verbinder 14 vorliegt, kann der zweite Komparator 28 ein entsprechendes elektrisches Signal zu dem ersten Und-Gatter 38 zuführen.

Der dritte Komparator 30 ist elektrisch mit der Zustandsüberwachungseinheit 14D zum Empfangen von elektrischen Signalen, insbesondere Spannungssignalen, verbunden. Die Zustandsüberwachungseinheit 14D kann beispielsweise zur Überwachung einer Temperatur des ersten Verbinders 14 zum Laden des elektrischen Energiespeichers 12 ausgebildet sein. Die Zustandsüberwachungseinheit 14D kann insbesondere einen NTC oder eine NTC-Kette mit zwei parallel oder in Reihe geschalteten NTCs, einen PTC (Widerstand oder Thermistor mit positivem Temperaturkoeffizient (englisch: positive temperature coefficient - PTC) oder eine PTC-Kette, einen Pt100 (Platinmesswiderstand mit Nennwiderstand von 100 Ω) und/oder einen Pt1000 (Platinmesswiderstand mit Nennwiderstand von 1000 Ω) oder dergleichen aufweisen.

Der dritte Komparator 30 ist so ausgebildet, dass basierend auf einem Wert, zum Beispiel einer Spannungshöhe, des elektrischen Signals von der Zustandsüberwachungseinheit 14D erfasst wird, ob eine zulässige Temperatur beim Laden vorliegt. Beispielsweise kann der dritte Komparator 30 vergleichen, ob eine Spannungshöhe des elektrischen Signals innerhalb eines vorbestimmten, zum Beispiel zulässigen, Spannungsbereichs liegt oder mit einem vorbestimmten, zum Beispiel zulässigen, Spannungswert übereinstimmt. Sofern der dritte Komparator 30 erfasst, dass eine zulässige Temperatur vorliegt, führt der dritte Komparator 30 ein entsprechendes elektrisches Signal zu dem ersten Und-Gatter 38 zu.

Das erste Und-Gatter 38 ist dem ersten Komparator 26, dem zweiten Komparator 28, dem dritten Komparator 30 und einem zweiten Invertierer 48 nachgeschaltet. Das erste Und-Gatter 38 prüft, ob elektrische Signale von den Komparatoren 26, 28, 30 und dem zweiten Invertierer 48 anliegen (z. B. Signal hoch). Mit anderen Worten gesagt, das erste Und-Gatter 38 prüft, ob ein Ladekabel mit dem ersten Verbinder 14 verbunden ist, ob das Ladekabel mit dem ersten Verbinder 14 verriegelt ist, ob eine zulässige Temperatur am ersten Verbinder 14 vorliegt und ob das zweite Und-Gatter 40 kein (entprelltes) elektrisches Signal zum Einschalten einer elektrischen Energieversorgung des zweiten Ladeschalters 20 ausgibt.

Die Zustandsüberwachungseinheiten 16B, 16C, 16D können wie die Zustandsüberwachungseinheiten 14B, 14C, 14D ausgebildet sein. Das heißt, die Zustandsüberwachungseinheit 16B kann wie die Zustandsüberwachungseinheit 14B ausgebildet sein, usw. Auf ähnliche Weise können die Komparatoren 32, 34, 36 wie die Komparatoren 26, 28, 30 ausgebildet sein. Das zweite Und-Gatter 40 kann dem vierten Komparator 32, dem fünften Komparator 34, dem sechsten Komparator 36 und einem ersten Invertierer 46 nachgeschaltet sein. So kann mittels des zweiten Und-Gatters 40 geprüft werden, ob ein Ladekabel mit dem zweiten Verbinder 16 verbunden ist, das Ladekabel mit dem zweiten Verbinder 16 verriegelt ist, ob eine zulässige Temperatur am zweiten Verbinder 16 vorliegt, und ob das erste Und-Gatter 38 kein (entprelltes) elektrisches Signal zum Einschalten einer elektrischen Energieversorgung des ersten Ladeschalters 18 ausgibt.

Die Treiberschaltung 22 kann ferner einen ersten Filter 42 und einen zweiten Filter 44 aufweisen. Der erste Filter 42 ist dem ersten Und-Gatter 38 nachgeschaltet. Der zweite Filter 44 ist dem zweiten Und-Gatter 40 nachgeschaltet. Die Filter 42, 44 sind insbesondere als Entprellfilter zum Entprellen eines von den Und-Gattern 38, 40 zugeführten elektrischen Signals ausgebildet. Wie dargestellt ist, können die Filter 42, 44 beispielsweise als RC-Glieder, insbesondere RC-Tiefpassfilter, bestehend aus einem ohmschen Widerstand (R) und einem Kondensator (C) ausgebildet sein.

Die Treiberschaltung 22 kann ferner den ersten Invertierer 46 und den zweiten Invertierer 48 aufweisen. Der erste Invertierer 46 ist dem ersten Filter 42 nachgeschaltet und dem zweiten Gatter 40 vorgeschaltet. Der zweite Invertierer 48 ist dem zweiten Filter 44 nachgeschaltet und dem ersten Und-Gatter 38 vorgeschaltet. Wenn den ersten Filter 42 ein elektrisches Signal zum Einschalten einer elektrischen Energieversorgung des ersten Ladeschalters 18 verlässt, so wird dieses elektrische Signal zusätzlich mittels des ersten Invertierers 46 invertiert und dem zweiten Und-Gatter 40 zugeführt. Somit kann verhindert werden, dass mittels des zweiten Und-Gatters 40 ein Einschalten einer elektrischen Energieversorgung des zweiten Ladeschalters 20 möglich ist, wenn eine elektrische Energieversorgung des ersten Ladeschalters 18 eingeschaltet ist. Der Grund hierfür ist, dass entweder nur über den ersten Verbinder 14 oder nur über den zweiten Verbinder 16 der elektrische Energiespeicher 12 geladen werden soll bzw. kann. Gleichermaßen kann der zweite Invertierer 48 verhindern, dass eine elektrische Energieversorgung des ersten Ladeschalters 18 eingeschaltet wird, wenn eine elektrische Energieversorgung des zweiten Ladeschalters 20 eingeschaltet ist.

Die Treiberschaltung 22 weist ferner einen ersten Diagnosepfad 50 und einen zweiten Diagnosepfad 52 auf. Der erste Diagnosepfad 50 ist dem ersten Filter 42 nachgeschaltet. Der zweite Diagnosepfad 52 ist dem zweiten Filter 44 nachgeschaltet. Die Diagnosepfade 50, 52 sind mit der elektrischen Steuereinheit 24 zum Übertragen von Diagnosesignalen, die einen Zustand einer elektrischen Energieversorgung des ersten Ladeschalters 18 bzw. des zweiten Ladeschalters 20 angeben, verbunden.

Die Treiberschaltung 22 weist zusätzlich einen ersten Koppler 54 und einen zweiten Koppler 56 auf. Mittels des ersten Kopplers 54 kann eine elektrische Energieversorgung 58 des ersten Ladeschalters 18 eingeschaltet und ausgeschaltet werden. Der erste Koppler 54 schaltet eine elektrische Energieversorgung des ersten Ladeschalters 18 ein, wenn das von dem ersten Filter 42 empfangene (entprellte) Signal angibt, dass das Ladekabel mit dem ersten Verbinder 14 verbunden ist, dass das Ladekabel mit dem ersten Verbinder 14 verriegelt ist, dass eine zulässige (Lade-) Temperatur am ersten Verbinder 14 vorliegt und dass eine elektrische Energieversorgung 60 des zweiten Ladeschalters 20 ausgeschaltet ist. Der zweite Koppler 56 arbeitet auf analoge Weise bezüglich eines Einschaltens und eines Ausschaltens der elektrischen Energieversorgung 60 des zweiten Ladeschalters 20. Die Koppler 54 und 56 können, wie dargestellt ist, beispielsweise als Optokoppler ausgebildet sein. Es ist allerdings auch möglich, zum Beispiel Transistoren oder andere elektronische Koppler zu verwenden.

Die Treiberschaltung 22 kann ferner einen elektrischen Energieversorgungsanschluss 62 zur Versorgung der internen Komponenten der Treiberschaltung 22, einen Referenzspannungsanschluss 64 für die Verriegelungserfassung mittels der Komparatoren 28, 34 und/oder einen Masseanschluss 66 aufweisen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des ersten Verbinders, der mindestens einen ersten Zustandsüberwachungseinheit, des ersten Ladeschalters und/oder der Treiberschaltung des unabhängigen Anspruchs 1 offenbart.

### Bezugszeichenliste

- 10: Kraftfahrzeug
- 12: Elektrischer Energiespeicher
- 14: Erster Verbinder
- 14A: Ladeanschluss
- 14B: Zustandsüberwachungseinheit
- 14C: Zustandsüberwachungseinheit
- 14D: Zustandsüberwachungseinheit
- 16: Zweiter Verbinder
- 16A: Ladeanschluss
- 16B: Zustandsüberwachungseinheit
- 16C: Zustandsüberwachungseinheit
- 16D: Zustandsüberwachungseinheit
- 18: Erster Ladeschalter
- 20: Zweiter Ladeschalter
- 22: Treiberschaltung
- 24: Steuereinheit
- 26: Erster Komparator
- 28: Zweiter Komparator
- 30: Dritter Komparator
- 32: Vierter Komparator
- 34: Fünfter Komparator
- 36: Sechster Komparator
- 38: Erstes Und-Gatter
- 40: Zweites Und-Gatter
- 42: Erster Filter
- 44: Zweiter Filter
- 46: Erster Invertierer
- 48: Zweiter Invertierer
- 50: Erster Diagnosepfad
- 52: Zweiter Diagnosepfad
- 54: Erster Koppler
- 56: Zweiter Koppler
- 58: Erste elektrische Energieversorgung
- 60: Zweite elektrische Energieversorgung
- 62: Elektrischer Energieversorgungsanschluss
- 64: Referenzspannungsanschluss
- 66: Masseanschluss

## Patentansprüche

1. Vorrichtung zum Laden eines elektrischen Energiespeichers (12), insbesondere einer Traktionsbatterie, eines Elektro-Kraftfahrzeugs (10), insbesondere Elektro-Nutzfahrzeugs, aufweisend:
einen ersten Verbinder (14), insbesondere Steckverbinder, zum Verbinden mit einem Ladekabel einer elektrischen Ladestation, wobei der erste Verbinder (14) einen elektrischen Ladeanschluss (14A) zum Empfangen eines elektrischen Ladestroms zum Laden des elektrischen Energiespeichers (12) aufweist;
mindestens eine erste Zustandsüberwachungseinheit (14B, 14C, 14D) zum Ausgeben eines elektrischen Signals, das einen Zustand einer Verbindung zwischen dem ersten Verbinder (14) und dem Ladekabel angibt;
einen ersten Ladeschalter (18) zum Verbinden und Trennen des elektrischen Ladeanschlusses (14A) des ersten Verbinders (14) und des elektrischen Energiespeichers (12); und
eine Treiberschaltung (22), die eine elektrische Energieversorgung (58) des ersten Ladeschalters (18) basierend auf einem oder mehreren elektrischen Signalen von der mindestens einen ersten Zustandsüberwachungseinheit (14B, 14C, 14D) ansteuert.

2. Vorrichtung nach Anspruch 1, wobei:
die mindestens eine erste Zustandsüberwachungseinheit (14B; 14C, 14D) eine Zustandsüberwachungseinheit (14B) zum Ausgeben eines elektrischen Signals, das ein Vorhandensein einer Verbindung zwischen dem ersten Verbinder (14) und dem Ladekabel angibt, aufweist.

3. Vorrichtung nach Anspruch 1 oder Anspruch 2, wobei:
die mindestens eine erste Zustandsüberwachungseinheit (14B; 14C, 14D) eine Zustandsüberwachungseinheit (14C) zum Ausgeben eines elektrischen Signals, das einen Zustand einer Verriegelung zwischen dem ersten Verbinder (14) und dem Ladekabel angibt, aufweist.

4. Vorrichtung nach einem der vorherigen Ansprüche, wobei:
die mindestens eine erste Zustandsüberwachungseinheit (14B; 14C, 14D) eine Zustandsüberwachungseinheit (14D) zum Ausgeben eines elektrischen Signals, das eine Temperatur des Ladekabels, des ersten Verbinders (14) und/oder des elektrischen Ladeanschlusses (14A) angibt, aufweist.

5. Vorrichtung nach einem der vorherigen Ansprüche, ferner aufweisend:
einen zweiten Verbinder (16), insbesondere Steckverbinder, zum Verbinden mit einem Ladekabel einer elektrischen Ladestation, wobei der zweite Verbinder (16) einen elektrischen Ladeanschluss (16A) zum Empfangen eines elektrischen Ladestroms zum Laden des elektrischen Energiespeichers (12) aufweist; und
mindestens eine zweite Zustandsüberwachungseinheit (16B, 16C, 16D) zum Ausgeben eines elektrischen Signals, das einen Zustand einer Verbindung zwischen dem zweiten Verbinder (16) und dem Ladekabel angibt.

6. Vorrichtung nach Anspruch 5, ferner aufweisend:
einen zweiten Ladeschalter (20) zum Verbinden und Trennen des elektrischen Ladeanschlusses (16A) des zweiten Verbinders (16) mit dem elektrischen Energiespeicher (12).

7. Vorrichtung nach Anspruch 5 oder Anspruch 6, wobei:
die Treiberschaltung (22) eine elektrische Energieversorgung (60) des zweiten Ladeschalters (20) basierend auf einem oder mehreren elektrischen Signalen von der mindestens einen zweiten Zustandsüberwachungseinheit (16B, 16C, 16D) ansteuert.

8. Vorrichtung nach einem der Ansprüche 5 bis 7, wobei die Treiberschaltung (22) aufweist:
einen ersten Invertierer (46), der beim Einschalten der elektrischen Energieversorgung (58) des ersten Ladeschalters (18) durch die Treiberschaltung (22) eine elektrische Energieversorgung (60) des zweiten Ladeschalters (20) verhindert; und/oder
einen zweiten Invertierer (48), der beim Einschalten einer elektrischen Energieversorgung (60) des zweiten Ladeschalters (20) durch die Treiberschaltung (22) die elektrische Energieversorgung (58) des ersten Ladeschalters (18) verhindert.

9. Vorrichtung nach einem der vorherigen Ansprüche, wobei die Treiberschaltung (22) aufweist:
einen ersten Diagnosesignalpfad (50) zum Verbinden mit einer Steuereinheit (24) zum Übertragen eines elektrischen Signals, das einen Zustand der elektrischen Energieversorgung (58) des ersten Ladeschalters (18) durch die Treiberschaltung (22) angibt; und/oder
einen zweiten Diagnosepfad (52) zum Verbinden mit einer Steuereinheit (24) zum Übertragen eines elektrischen Signals, das einen Zustand einer elektrischen Energieversorgung (60) des zweiten Ladeschalters (20) durch die Treiberschaltung (22) angibt.

10. Vorrichtung nach einem der vorherigen Ansprüche, wobei die Treiberschaltung (22) aufweist:
einen ersten Filter (42), insbesondere Entprellfilter, zum Filtern, insbesondere Entprellen, eines elektrischen Signals zum Ansteuern der elektrischen Energieversorgung (58) des ersten Ladeschalters (18); und/oder
einen zweiten Filter (44), insbesondere Entprellfilter, zum Filtern, insbesondere Entprellen, eines elektrischen Signals zum Ansteuern der elektrischen Energieversorgung (60) des zweiten Ladeschalters (20).

11. Vorrichtung nach einem der vorherigen Ansprüche, wobei die Treiberschaltung (22) aufweist:
mindestens einen Komparator (28, 30, 32, 34, 36, 38), insbesondere Fensterkomparator, vorzugsweise Fensterspannungskomparator, der der mindestens einen ersten Zustandsüberwachsungseinheit (14B, 14C, 14D) und/oder der mindestens einen zweiten Zustandsüberwachungseinheit (16B, 16C, 16D) nachgeschaltet ist.

12. Vorrichtung nach einem der vorherigen Ansprüche, wobei
mehrere erste Zustandsüberwachungseinheiten (14B, 14C, 14D) vorgesehen sind, denen jeweils ein Komparator (28, 30, 32), insbesondere Fensterkomparator, vorzugsweise Fensterspannungskomparator, nachgeschaltet ist, denen ein erstes Und-Gatter (38) nachgeschaltet ist; und/oder
mehrere zweite Zustandsüberwachungseinheiten (16B, 16C, 16D) vorgesehen sind, denen jeweils ein Komparator (34, 36, 38), insbesondere Fensterkomparator, vorzugsweise Fensterspannungskomparator, nachgeschaltet ist, denen ein zweites Und-Gatter (40) nachgeschaltet ist.

13. Vorrichtung nach Anspruch 12, wobei:
das erste Und-Gatter (38) dem zweiten Invertierer (48) nachgeschaltet ist; und/oder das zweite Und-Gatter (40) dem ersten Invertierer (46) nachgeschaltet ist.

14. Vorrichtung nach einem der vorherigen Ansprüche, wobei:
das Schalten des ersten Ladeschalters (18) und/oder des zweiten Ladeschalters (20) von einer Steuereinheit (24) gesteuert wird.

15. Kraftfahrzeug (10), insbesondere Nutzfahrzeug, mit einer Vorrichtung nach einem der vorherigen Ansprüche.
